(19) Europäisches Patentamt / European Patent Office / Office européen des brevets

(11) **EP 4 385 268 B1**

(12) **EUROPEAN PATENT SPECIFICATION**

(45) Date of publication and mention
of the grant of the patent:
**04.03.2026 Bulletin 2026/10**

(21) Application number: **22704307.2**

(22) Date of filing: **21.01.2022**

(51) International Patent Classification (IPC):
*H04W 24/02* (2009.01)    *H04W 72/50* (2023.01)
*G06N 3/092* (2023.01)    *G06N 3/098* (2023.01)

(52) Cooperative Patent Classification (CPC):
**H04W 72/535; G06N 3/092; G06N 3/098;**
H04W 24/02; H04W 72/27

(86) International application number:
**PCT/EP2022/051291**

(87) International publication number:
**WO 2023/138776 (27.07.2023 Gazette 2023/30)**

(54) **APPARATUS AND METHOD FOR DISTRIBUTED LEARNING FOR COMMUNICATION NETWORKS**

VORRICHTUNG UND VERFAHREN FÜR VERTEILTES LERNEN FÜR KOMMUNIKATIONSNETZE

APPAREIL ET PROCÉDÉ D'APPRENTISSAGE DISTRIBUÉ POUR RÉSEAUX DE COMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**19.06.2024 Bulletin 2024/25**

(73) Proprietor: **Huawei Technologies Co., Ltd.
Shenzhen, Guangdong 518129 (CN)**

(72) Inventors:
• **TSILIMANTOS, Dimitrios
80992 Munich (DE)**
• **DESTOUNIS, Apostolos
80992 Munich (DE)**

(74) Representative: **Gill Jennings & Every LLP
The Broadgate Tower
20 Primrose Street
London EC2A 2ES (GB)**

(56) References cited:
WO-A1-2012/072445    CN-A- 112 887 999
US-A1- 2020 296 741    US-B2- 8 385 364

## Description

## FIELD OF THE INVENTION

This invention relates to communication networks, for example, to the determination of policies for the allocation of network resources or scheduling in such a network.

## BACKGROUND

In the next generation of wireless networks, a large number of devices are expected to be connected to each access point. Specifically, for Internet of Things (IoT) networks, forecasts predict one million devices per cellular base station. In this setting, radio resource allocation and scheduling, which are key aspects for wireless networks, are considered a challenging task.

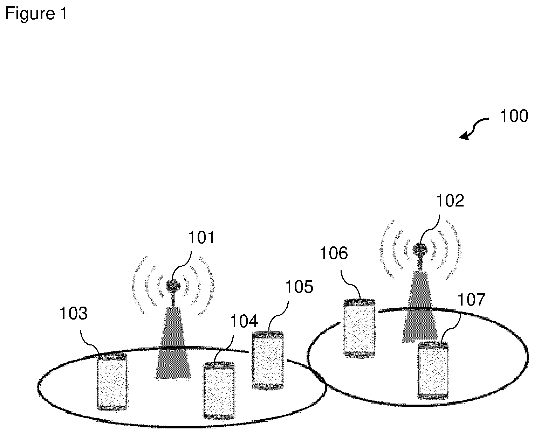

A representative view of a mobile communications network 100 with two access points 101 and 102 and their connected devices, 103, 104, 105 and 106,107 for access points 101 and 102 respectively, is shown in Figure 1. Generally, each access point 101, 102 collects the state information for its connected devices, and then an optimization problem is solved to decide which users to schedule and possibly how to allocate radio resources, such as transmission power, subcarrier frequency and beam selection. Moreover, the interference of devices that belong to nearby access points can have a significant impact on the overall performance and also needs to be considered while taking these decisions.

Similarly to the approach that is used in most existing networks, each access point can perform the radio resource allocation task by relying only on local information from its connected devices. This approach has the advantage that it is scalable, as it does not require any communication among the access points. However, it is not flexible enough to take into account the state of neighboring access points and can lead to poor performance.

Alternatively, the whole problem could be handled centrally by a master single entity, which would need to collect the bulky information from all of the access points, solve an even more challenging large-scale optimization problem, and then send the respective radio resource allocation decisions back to each access point. This is not a very practical approach, as it is very expensive in terms of required communication and may also induce significant latency.

For these reasons, it is anticipated that for an improved performance, communications will rely on distributed resource management, where access points will exchange only the absolutely necessary information. This information exchange should be very light in terms of the amount of transmitted bits. While this type of distributed resource management is certainly a very attractive approach, it is a very demanding task and most of the proposed ideas are either generally impractical or suffer from stability and convergence issues that lead to poor system performance.

Distributed radio resource allocation becomes even more attractive with the recent success of Artificial Intelligence (AI) and specifically of Deep Neural Networks (DNNs), which have the potential to outperform existing solutions. The desire to have a decision-making framework for distributed resource management that adapts to the dynamic environment has naturally led to solutions that combine the representation power of DNNs with ideas from Reinforcement Learning (RL).

RL is an area of machine learning where agents (for example, the access points in a network) learn an optimal behavior based on their trial-and-error interaction with the environment, and eventually learn to maximize a long-term objective. Original RL methods suffer from the curse of dimensionality, which limits their application to models with a small number of states. This limitation can be tackled with the help of DNNs, which can be used to approximate functions used in RL algorithms.

Moreover, even if a large state space is no longer a prohibitive factor, there is another challenge in RL-based distributed approaches that needs to be addressed. Besides the dynamics of the environment, each agent must also take into account the behavior of other agents, where intuitively, an access point must learn to predict the decisions of other access points and take strategic decisions in response. Convergence can be a problem in this setting, and it is often assumed that there is centralized training, which however is impractical for the resource allocation problem.

Another approach is to have independent distributed training on each access point, but this usually has stability issues and leads to unfair solutions, which is a poor performance indicator for wireless networks.

Traditional systems for radio resource allocation that can operate in the multi-cell network setting with many access points are based on solutions that use only local information, such as the Proportional Fairness (PF) scheduler and the Max-Weight scheduler. PF is a standard scheduler in cellular systems that aims to allocate fair service rates among devices and is considered the standard scheduler for current wireless systems. Max-Weight provides an effective mechanism to achieve queue stability. Note that each access point is equipped with a queue where unserved traffic from connected devices waits for transmission. Although these solutions are easy to implement, they can have poor performance when there is high interaction among the access points due to strong interference.

There have been also proposals for distributed algorithms that mainly solve an optimization problem at each time slot of the system, i.e. usually with an objective of a weighted sum rate maximization. However, they suffer from slow decision making, high information exchange, and in fact, by myopically optimizing a per-slot objective, they do not necessarily lead to the desired long-term behavior of the system.

In order to deal with the above issues, DRL may be applied to radio resource allocation. The main idea is that each access point learns its scheduling policy or radio resource allocation strategy, i.e. which device to schedule and which transmission parameters to use, based on observations from the interactions with the environment and other access points.

Previous works generally fall into the following main categories:

Firstly, independent RL. Here, each access point runs a single-agent RL algorithm (such as deep Q-learning) based on its own local observations. This has the benefit that it requires no overhead for information exchange. The main drawback is that often the learned policy leads to undesired behavior, such as non-convergence and access points failing to collaborate.

Another category of approaches is centralized training with decentralized execution. Here the policies are distributed (i.e. the DNN of each agent takes actions based only on local observations), but their training is done in a centralized manner by a central entity that has access to the whole system state. The purpose of the central entity is to stabilize the training process. After training is done, the updated DNN parameters that represent the new policies are sent to the access points. This approach has the main drawback that it is not scalable, as it requires a huge overhead to communicate the states and the updated policies between the central entity and the access points.

A further category of approaches involves the use of consensus-based algorithms over the control network topology. The common idea here is to remove the central entity in order to avoid the communication overhead and allow the agents to communicate through a sparse control network with only a subset of agents, with the objective to reach a consensus over a learning variable and eventually over the policy to adopt. This approach still requires relatively high communication overhead for the exchange of states and DNN parameters among the access points. It further usually requires the strong assumption for full state knowledge at each access point in order to have performance guarantees.

It is desirable to develop a method which overcomes such problems.

WO 2012/072445 A1 discloses a method of controlling a telecommunications network, the network comprising at least one device arranged for interaction as regards network configuration parameters.

## SUMMARY

According to one aspect there is provided a node for a wireless communications network, as set out in appended claim 1, the node being configured to communicate with one or more other nodes in the communications network and to implement one or more policies for multiple devices in the network which are associated with the node, the node being configured to: implement a first policy for the multiple devices which are associated with the node; determine a local reward or local cost for the multiple devices which are associated with the node; receive a respective message from each of the one or more other nodes in the network indicating corresponding local rewards or local costs of devices in the network associated with a respective one of the other nodes; in dependence on the or each respective message, determine a global reward or global cost for the communications network; and update the first policy in dependence on the global reward or global cost, wherein the first policy is for performing uplink scheduling for the multiple devices associated with the node and/or wherein the first policy is for allocating radio resources to the multiple devices associated with the node.

This may advantageously enable decentralized radio resource allocation in wireless networks, thus removing the need for a central entity that leads to high communication overhead. The approach can be executed at each node in the network concurrently. Advantageously, policies can be updated in a way that the total reward is statistically guaranteed to improve and requires much less communication overhead than in systems with centralized training.

The first policy may define a set of actions for each of the multiple devices associated with the node. The node may be configured to determine the local reward or the local cost in dependence on outcomes of the set of actions. This may be an efficient way of determining the local reward or local cost.

The node may be configured to observe state information for each of the multiple devices associated with the node. This may allow the node to collect information about the current state of its connected devices.

The state information may comprise one or more of queue lengths and channel gains of the multiple devices associated with the node. This may allow the node to determine a local reward or local cost for the devices associated with the node.

The node may be configured to: observe state information for each of the multiple devices associated with the node at a first time; input the state information to the first policy; and output the set of actions for implementation by the multiple devices associated with the node. This may allow the node to determine the actions to be implemented by each of the associated devices according to the first policy.

The node may be configured to observe updated state information for the multiple devices associated with the node at a second time following implementation of the set of actions by the multiple devices associated with the node. In some embodiments, the node may be configured to determine the local reward or the local cost in dependence on the updated state information. This may allow the local reward or local cost to be determined by the node from information received by each of the devices associated with the node.

The first policy may be for performing uplink scheduling for the multiple devices associated with the node. In this case, the set of actions may define which devices of the multiple devices associated with the node will be scheduled for transmission. This may allow the node to perform efficient scheduling for its associated devices.

The first policy may be for performing network resource allocation for the multiple devices associated with the node. Such network resources may comprise one or more of transmission power, subcarrier frequency and beam selection. In this case, the set of actions may define which network resources are to be used at each device of the multiple devices associated with the node. This may allow the node to efficiently manage network resources for its associated devices.

The local reward or the local cost may be a function of queue lengths of the multiple devices associated with the node. The local cost may be equal to the sum of the queue lengths of the multiple devices associated with the node. The local reward may be equal to the minus of the sum of the queue lengths of the multiple devices associated with the node. This may allow the local reward or local cost for the devices associated with the node to be determined from state information received by the node from the associated devices.

The node may be further configured to send a message to each of the one or more other nodes in the network indicating the local reward or the local cost of devices in the network associated with the node. This may allow other nodes in the network to determine the global reward or global cost for the network and to update their policies for their associated devices.

The global reward or global cost may comprise the sum of the local rewards or local costs respectively. The global reward or global cost may therefore be the reward or cost respectively taking into account all of the devices in the network. This may allow the node to determine the global reward or global cost from the received local rewards or local costs from other nodes.

The respective message may not comprise one or more (or all) of state information, actions or policy information for devices associated with the respective node of the one or more other nodes. The respective message may comprise only (i.e. may consist of) the local reward or local cost for devices associated with the respective node. There is thus no heavy signaling required from each node, since decisions (for example for resource allocation or scheduling) are taken in a distributed way, based on the exchange of the respective data-efficient messages. A node may only send a single real-valued number that corresponds to the local reward or local cost. This may allow for efficient decentralized decision making in the network.

The multiple devices which are associated with the node may be devices in the communications network for which the node is spatially closer than the one or more other nodes. This may allow the node to reliably receive information from its associated devices. The multiple devices which are associated with the node may be connected to the node wirelessly or via a wired connection.

The node may be configured to update the first policy using a policy gradient method that employs sample averages over multiple trajectories for estimating an advantage function. This may allow the node to update the first policy in a way that improves the performance of the communication network.

The first policy may be parameterized by a vector comprising weights of a neural network. This may be a convenient implementation utilizing artificial intelligence that allows the node to deal with a large state space.

The node may be a base station. The communications network may be a cellular network. This may allow the node to be used in telecommunications applications.

According to a second aspect there is provided a method for a wireless communications network comprising a node, as set out in appended claim 13, the node being configured to communicate with one or more other nodes in the communications network and to implement one or more policies for multiple devices in the network which are associated with the node, the method comprising: implementing a first policy for the multiple devices which are associated with the node; determining a local reward or local cost for the multiple devices which are associated with the node; receiving a respective message from each of the one or more other nodes in the network indicating corresponding local rewards or local costs of devices in the network associated with a respective one of the other nodes; in dependence on the or each respective message, determining a global reward or global cost for the communications network; and updating the first policy in dependence on the global reward or global cost, wherein the first policy is for performing uplink scheduling for the multiple devices associated with the node and/or wherein the first policy is for allocating radio resources to the multiple devices associated with the node.

The method may advantageously enable decentralized radio resource allocation in wireless networks, thus removing the need for a central entity that leads to high communication overhead. The approach can be executed at each node in the network concurrently. Advantageously, policies can be updated in a way that the total reward is statistically guaranteed to improve and requires much less communication overhead than in systems with centralized training.

According to a further aspect there is provided a computer readable storage medium having stored thereon computer readable instructions that, when executed at a computer system, cause the computer system to perform the method as set forth above. The computer system may comprise one or more processors. The computer readable storage medium may be a non-transitory computer readable storage medium.

## BRIEF DESCRIPTION OF THE FIGURES

The present invention will now be described by way of example with reference to the accompanying drawings.

In the drawings:

Figure 1 schematically illustrates an example of a mobile communications network.

Figure 2 schematically illustrates the main blocks of a system for decentralized resource allocation described herein.

Figure 3 schematically illustrates a flowchart of the operation of the system for decentralized resource allocation described herein.

Figure 4 shows an example of a method for a communications network.

Figure 5 schematically illustrates the topology of $N = 4$ access points and $K = 20$ randomly located devices.

Figure 6 shows an example of the global reward over training and a comparison against baselines.

Figure 7 shows an example of global queue length for a full episode after training and a comparison against baselines.

## DETAILED DESCRIPTION

Described herein is a communications system which can advantageously utilize Artificial Intelligence (AI) at the access point and can be used for operations such as efficient decentralized radio resource allocation or scheduling in wireless networks.

The system is designed in a way that allows the access points (agents) to coordinate by sending and receiving a simple message, instead of sending and receiving their whole local observations, actions and deep neural network (DNN) parameters. This way, the training process for policies can be stabilized and the agents can converge to efficient resource allocation or scheduling policies with very low communication overhead.

In embodiments of the present invention, each network node or access point may comprise a processor and a memory. The memory stores in a non-transient way code that is executable by the processor to implement the respective node in the manner described herein. Each of the nodes or access points may also comprise a transceiver for transmitting and receiving data to and from other nodes or access points in the network. The network is preferably a wireless network.

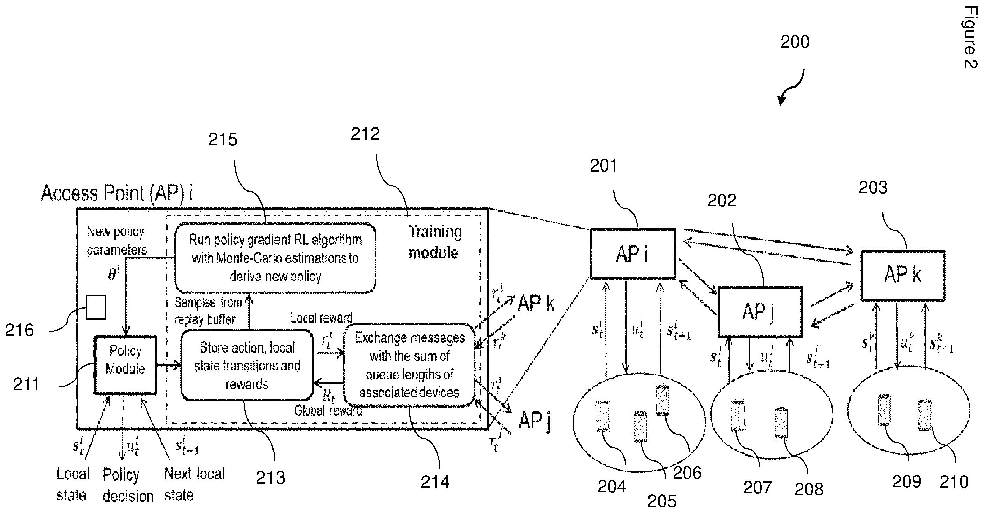

The main blocks of an example of the communications system are depicted in Figure 2 and are described in more detail below.

As shown in Figure 2, the communications network 200 comprises three nodes: access points 201, 202 and 203. Devices 204, 205 and 206 are associated with (i.e. connected to) access point 201; devices 207 and 208 are associated with access point 202; and devices 209 and 210 are associated with access point 203. A node can receive information from and can send information to each of the devices associated with the node.

The devices which are associated with a particular access point are in this example devices in the communications network for which the particular access point is spatially closer than the other access points in the network. This can allow an access point to reliably send and receive information to and from its associated devices respectively.

Each access point is configured to observe state information for each of the multiple devices associated with the access point. For example, the state information may include queue lengths (the length of a queue where unserved traffic from a connected device waits for transmission) and/or channel gains of a device.

As shown in more detail for access point 201, each access point comprises a Policy Module 211 and a Training Module 212.

In this implementation, the access points 201, 202, 203 each use their own policy for scheduling and/or radio resource allocation for their associated devices and observe their new local state as the outcome of their scheduling and/or radio resource allocation decisions (actions). Such resources for the network may comprise one or more of transmission power, subcarrier frequency and beam selection.

An access point may be configured to observe state information for each of its associated devices at a first time, input the state information to a first (current) policy, and output a set of actions for implementation by the multiple devices associated with the access point.

An access point can observe updated state information for each of its associated devices at a second time following implementation of the set of actions by the associated devices. An access point can determine the local reward or the local cost in dependence on the updated state information.

An access point therefore observes and stores its own state transitions (for example, the queue length and channel gains of its connected devices) and rewards/costs by following the policy.

Once the access points have determined the local cost or local reward for their associated devices, a signaling phase follows, during which each access point exchanges a specific message with each of the other access points so that a global reward (or equivalently cost) can be calculated for the network.

In the preferred implementation, the global reward or global cost comprises the sum of the local rewards or local costs respectively of each of the access points in the network.

After a specified period of time where the access points have used their current policy, each access point runs an algorithm to update its policy by using the previously computed global reward.

Therefore, an access point can take radio resource allocation decisions by using a periodically updated radio resource allocation policy.

The access points are therefore configured to implement a first policy for the multiple devices which are associated with the access point. After determining a local reward or local cost for the multiple devices which are associated with the access point, the access point receives a respective message from each of the other access points in the network indicating corresponding local rewards or local costs of devices in the network associated with each of the other access points. The access point can also send its own message to the other access points indicating the local reward or local cost for its associated devices. In dependence on the received message(s), the access point determines a global reward or global cost for the communications network and updates the first policy in dependence on the global reward or global cost.

The access point is therefore configured to send and receive a signal that contains the local reward (or cost) by communicating with the other access points in order to find the global reward (or cost) at each state transition. In the above example, the local reward is the minus of the sum of the queue lengths or delays of all devices connected to this access point.

The access point therefore updates its radio resource allocation policy with the help of the calculated global reward. This may be done using policy gradient methods that employ sample averages over multiple trajectories for estimating the advantage function, as will be described in more detail later.

In the preferred implementation, the radio resource allocation policy is parametrized by a vector $\theta$. For example, this vector can contain the weights and biases of a deep neural network. The policy is frequently updated with the help of the Training Module 212.

The Training Module 212 of an access point $i$ calculates the local reward, given by the minus of the sum of the queue lengths $x_t^k$ of the devices associated to this access point, which is denoted by $K(i)$, $r_t^i = -\sum_{k \in K(i)} x_t^k$ and, as shown at 214, exchanges as a message only this local reward with the respective one of the other access points in order to compute the global reward as the sum of all the local rewards, i.e. $R_t = \sum_i r_t^i$. It then stores the global reward as the reward for this transition.

As shown at 213, the training module 212 stores the state transitions and actions of the access point, as well as the global rewards (or equivalently cost), accrued by the radio resource allocation policy, as calculated by the previous step.

In more detail, the training module can store in a replay buffer the tuple ( $s_t^i, u_t^i, R_t, s_{t+1}^i$ ), specifying the state $s_t^i$ at the beginning of that slot $t$, the resource allocation decision $u_t^i$ taken (i.e. the action), the global

reward $R_t$ computed from the exchange of messages described in the previous point and the next state $s_{t+1}^i$, which is a result of the resource allocation decision $u_t^i$ and the interference by the resource allocation decisions of the other access points. The state $s_t^i$ here includes the queue length $x_t^k$ and may also include the channel states $g_t^{k,i}$ of its $K(i)$ connected devices, i.e. $s_t^i = \left\{ \left( x_t^k, g_t^{k,i} \right) \right\}$ for $k \in K(i)$.

As shown at 215, the Training Module periodically runs an iteration of a policy gradient-based algorithm that uses the computed global reward in order to get an update of the policy parameters $\theta^i$, which are then provided to the Policy Module 211.

In the preferred implementation, for the last step of the training update, the Training Module 212 works as follows:

After a specified period of time where the access points have used their current policy, for example $M$ episodes of length $T$ slots, the Training Module of each access point computes for M trajectories the reward-to-go $\hat{R}_t^m = \sum_{t'=t}^{T} R_{t'}$ from each slot $t$ until the end of trajectory $m$, based on the previously calculated global reward $R_t$. The term trajectory denotes a sequence of observations, actions and rewards obtained when taking actions according to a given policy, which can be sampled from the replay buffer.

In order to reduce the variance of the estimation, the Training Module may optionally train a baseline function $b^i \left( s_t^i \right)$ of the local state $s_t^i$. This baseline function can be used to compute the advantage function $A^i \left( s_t^i, u_t^i \right) = \hat{R}_t^m - b^i \left( s_t^i \right)$ which quantifies how much is a certain action $u_t^i$ a good or a bad decision at a given state $s_t^i$.

In a preferred embodiment, the Training Module updates the policy parameters of the policy $\pi^i (. \,| s_t^i; \theta^i)$ with Monte-Carlo estimation for the rewards-to-go by using the computed advantage function.

Preferably, a policy gradient algorithm is used to estimate the gradient in the direction of which to update the policy, i.e. $g^i = \frac{1}{M} \sum_m \frac{1}{T} \sum_t A^i \left( s_t^i, u_t^i \right) \nabla_{\theta^i} \log \left( \pi^i (u_t^i | s_t^i; \theta^i) \right)$ and then the update of parameters is simply performed by $\theta^i \leftarrow \theta^i + a g^i$, where $a$ is the gradient step size.

Alternatively, more advanced policy gradient algorithms can be used, such as Trust Region Policy Optimization (TRPO) and Proximal Policy Optimization (PPO).

The above process implies that if the global reward at each slot $t$ is known to all access points, each access point can estimate the block of the gradients for the joint policy that corresponds to its own parameters $\theta^i$.

Thus, the factorized policy

$$\pi(u_t|s_t;\boldsymbol{\theta}) = \pi^1(u_t^1|s_t^1;\boldsymbol{\theta}^1) \cdots \pi^n(u_t^n|s_t^n;\boldsymbol{\theta}^n)$$ applied in the system will be updated in the direction of the stochastic gradient of the global average reward in a totally distributed manner. Thus, there is a theoretical guarantee that the policies are updated in a way that improves the performance and at the same time this is achieved by requiring much less communication overhead than the methods with centralized training.

The access point 201 also comprises a memory, shown at 216, configured to store computer readable instructions that, when executed by a processor of the access point (not shown in Figure 2), cause the access point to perform the method as described herein.

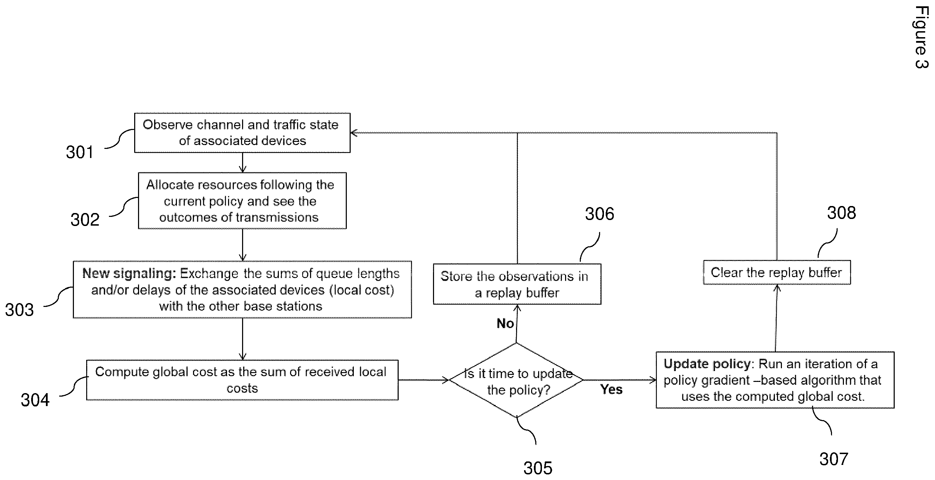

Figure 3 summarizes the functionality of the system for network resource allocation.

At 301 the Policy Module 211 receives the local observations of the access point 201 from its connected devices 204, 205, 206 as inputs at the beginning of each time slot. The local observations may comprise channel states and traffic states (for example, queue lengths) of the associated devices.

Then, shown at 302, based on this local information, the access point takes the radio resource allocation decisions for this time slot (for example, which device to schedule and which transmission parameters to use) following its own current policy.

For example, if the policy is represented by a neural network, the Policy Module performs a forward pass in this neural network, given the local observations as inputs, and provides a radio resource allocation as output. This radio resource allocation is then implemented by the actual Physical and MAC layer modules of the access point.

Following the implementation of the policy, the access point can observe the outcomes of the transmissions.

As shown at 303, the local cost or local reward (in this example, the plus or minus of the sums of the queue lengths and/or delays respectively) of the associated devices are exchanged with the other access points.

As shown at 304, the access point then computes the global cost (or reward) as the sum of the received local costs (or rewards).

Following this, the access point can determine whether it is time to update the policy, as shown at 305.

If it is not time to update the policy, the observations are stored in a replay buffer, as shown at 306. If it is time to update the policy, an iteration of a policy gradient-based algorithm is run that uses the computed global cost to update the policy, as shown at 307.

Once the policy has been updated, the replay buffer is cleared, as shown at 308. The process can then be repeated.

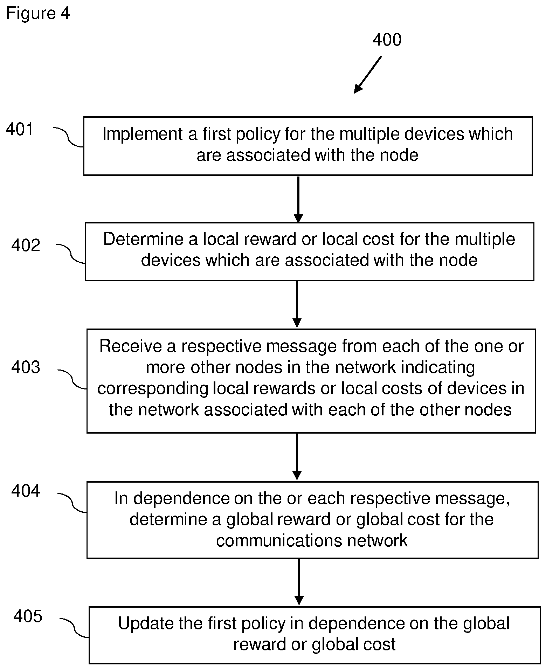

Figure 4 shows an example of a method for a communications network in accordance with embodiments of the present invention. The network comprises a node which is configured to communicate with one or more other nodes in the communications network and to implement one or more policies for multiple devices in the network which are associated with the node. At step 401, the method comprises implementing a first policy for the multiple devices which are associated with the node. At step 402, the method comprises determining a local reward or local cost for the multiple devices which are associated with the node. At step 403, the method comprises receiving a respective message from each of the one or more other nodes in the network indicating corresponding local rewards or local costs of devices in the network associated with each of the other nodes. At step 404, in dependence on the or each respective message, the method comprises determining a global reward or global cost for the communications network. At step 405, the method comprises updating the first policy in dependence on the global reward or global cost.

The node may be any of the nodes in a communications network comprising multiple nodes. The method may be implemented at each node in the network concurrently. Therefore, according to a further aspect there is provided a communications network comprising multiple nodes, each node being configured to perform the method described above and having any of the features described herein. Each node in the network may be configured to send a message to each of the other nodes in the network indicating the local reward or the local cost of devices in the network associated with the respective node.

Described below is a further representative implementation of the proposed system in a cellular communications network environment where the access points, in this case base stations, perform uplink scheduling for their connected devices. In this example, the set of actions defined by the policy implemented by the access point define which devices of the multiple devices associated with the access point will be scheduled for transmission. Therefore, each access point decides which of its associated devices to schedule at each time slot.

Regarding the traffic model, it is assumed that traffic $A_t^k$ (in bits) arrives at a device $k$ at each slot $t$ according to a random process.

For access point $i$ and its $K(i)$ connected devices:

The access point $i$ observes the state $s_t^i = \left\{ \left( x_t^k, g_t^{k,i} \right) \right\}$

for $k \in K(i)$, where: $x_t^k$ : amount of data bits of device $k$ at time slot $t$, not yet delivered (queue length); $g_t^{k,i}$ : channel state between device $k$ and access point $i$ at time slot $t$.

The action $u_t^i \in \{0, 1, ..., K\}$ is the selected device to schedule at each slot $t$. The choice $k = 0$ denotes the decision to schedule no device. Given the actions and the channel states of all access points at slot $t$, the number of transmitted bits sent by device $i$ at slot $t$ is calculated using the Shannon formula:

$$\mu_t^{u_t^i} = WT_s \log_2\left(1 + \frac{g_t^{u_t^i,i}P}{1+\sum_{j\neq i} g_t^{u_t^j,i}P}\right),$$

where $W$ is the bandwidth used for transmission, $T_s$ is the duration of each time slot and $P$ is the uplink transmission power normalized by the receiver noise power. The number of bits remaining in the queue of device $k$ in the beginning of the next slot is given by $x_{t+1}^k = [x_{t+1}^k - \mu_t^k]^+ + A_t^k$.

In this example, the local reward for each access point is defined as the minus of the sum of the queue lengths of its associated devices, i.e. $r_t^i = -\sum_k x_t^k$.

The Policy Module used in this embodiment is a deep neural network with $K + 1$ outputs with parameters $\theta^i$. The Training Module in this embodiment uses the Generalized Advantage Estimation (GAE) method for the advantage estimation and PPO as the policy gradient algorithm for the update of the weights $\theta^i$.

For the performance evaluation of the previous embodiment, simulations were run for a system of $N = 4$ access points in a topology of a square. In this example, the traffic follows a Poisson distribution with the same mean for all devices. There are $K = 20$ devices placed at random within the coverage area. Each device is associated with the closest BS. The policies are updated every epoch of 4 episodes, and each episode consists of 1000 time slots.

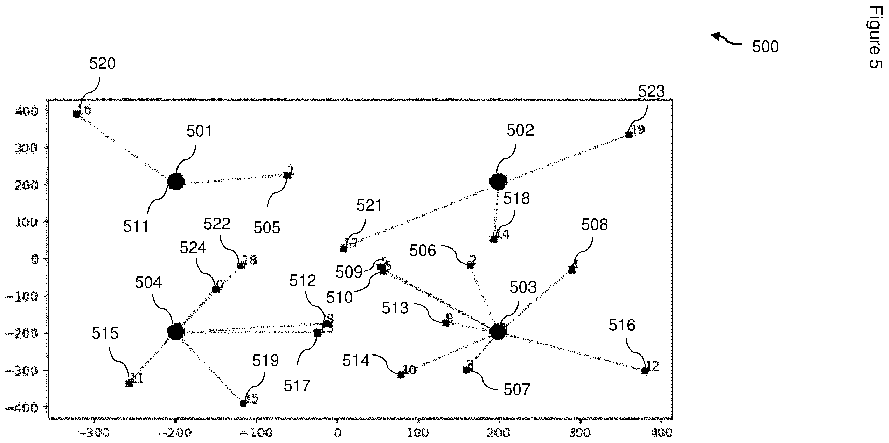

A random realization of this setting is shown in Figure 5, which shows the topology of network 500 with **N = 4** access points 501, 502, 503 and 504 and **K = 20** randomly located devices 505-524. The multiple devices which are associated with a particular access point are devices for which the particular access point is spatially closer than the other access points in the network.

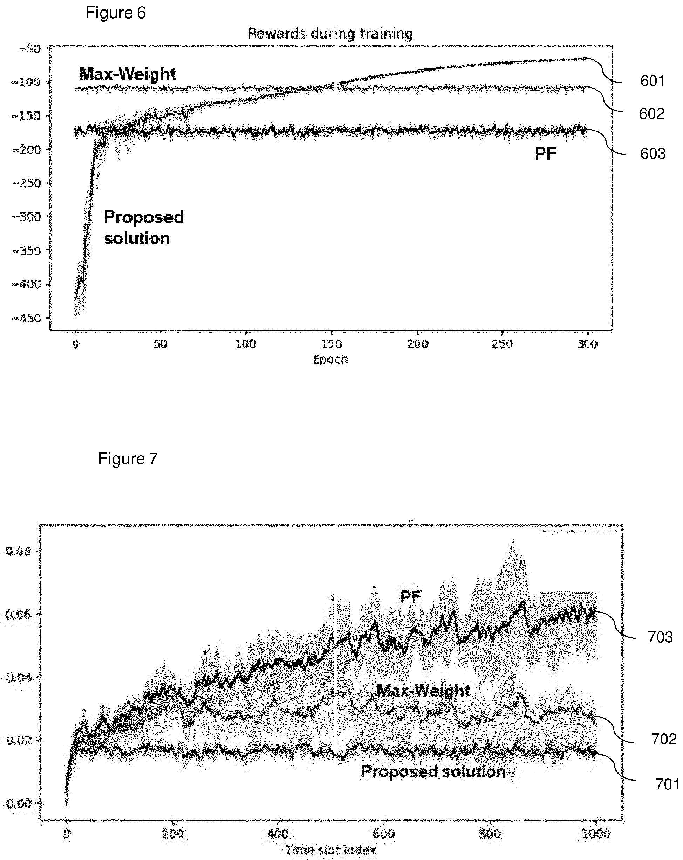

In order to evaluate the performance of this solution, it is compared against the standard scheduling algorithms of PF and Max-Weight in Figures 6 and 7.

Figure 6 presents the global reward as a function of the training epochs, for results averaged over five random realizations. The results for the present solution are indicated at 601. It can be seen that after a short training time, the information exchange among the access points allows the solution to quickly outperform PF (indicated at 603) and eventually to outperform Max-Weight (indicated at 602) also.

This is also evident in 7, where the global cost is shown, i.e. the sum of queue lengths from all devices in the system, for a full episode of 1000 slots after the training is finished. The proposed solution (indicated at 701) has managed to stabilize the queues very fast, with a total cost that is significantly reduced compared to Max-Weight (indicated at 702), while PF (indicated at 703) completely fails to handle the traffic with queue lengths that keep increasing as the time passes.

The system described herein can advantageously enable decentralized radio resource allocation and/or scheduling in wireless networks, thus removing the need for a central entity that leads to high communication overhead. The approach can be executed at each access point concurrently.

There is no heavy signaling needed from each access point, since resource allocations are performed in a distributed way. Indeed, an access point may advantageously only send a single real-valued number that corresponds to the local reward or local cost for the devices associated with the access point. Advantageously, the policies are updated in a way that the total reward is statistically guaranteed to improve and requires much less communication overhead than in systems with centralized training.

The system has a modular design that can allow for efficient decentralized radio resource allocation in wireless networks.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features. The scope of protection for the invention is defined by the appended claims.

**Claims**

1. A node (201) for a wireless communications network (200), the node being configured to communicate with one or more other nodes (202, 203) in the communications network and to implement one or more policies for multiple devices (204, 205, 206) in the network (200) which are associated with the node (201), the node (201) being configured to:

   implement (401) a first policy for the multiple devices (204, 205, 206) which are associated with the node (201); and
   determine (402) a local reward or local cost for the multiple devices (204, 205, 206) which are associated with the node (201), and **characterised in that** the node (201) is further configured to:

   receive (403) a respective message from each of the one or more other nodes (202, 203) in the network (200) indicating corresponding local rewards or local costs of devices (207, 208, 209, 210) in the network (200) associated with a respective one of the other nodes (202, 203);

in dependence on the or each respective message, determine (404) a global reward or global cost for the communications network (200); and

update (405) the first policy in dependence on the global reward or global cost, wherein the first policy is for performing uplink scheduling for the multiple devices (204, 205, 206) associated with the node (201) and/or wherein the first policy is for allocating radio resources to the multiple devices (204, 205, 206) associated with the node (201).

2. The node (201) as claimed in claim 1, wherein the first policy defines a set of actions for each of the multiple devices (204, 205, 206) associated with the node (201) and wherein the node (201) is configured to determine the local reward or the local cost in dependence on outcomes of the set of actions.

3. The node (201) as claimed in claim 2, wherein the node (201) is configured to observe state information for each of the multiple devices (204, 205, 206) associated with the node (201),

and optionally wherein the state information comprises one or more of queue lengths and channel gains of the multiple devices (204, 205, 206) associated with the node (201).

4. The node (201) as claimed in any of claims 2 to 3, wherein the node (201) is configured to:

observe state information for each of the multiple devices (204, 205, 206) associated with the node at a first time;

input the state information to the first policy; and

output the set of actions for implementation by the multiple devices (204, 205, 206) associated with the node (201),

and optionally wherein the node (201) is configured to observe updated state information for the multiple devices (204, 205, 206) associated with the node (201) at a second time following implementation of the set of actions by the multiple devices (204, 205, 206) associated with the node (201) and determine the local reward or the local cost in dependence on the updated state information.

5. The node (201) as claimed in any of claims 2 to 4, wherein the set of actions define which devices of the multiple devices (204, 205, 206) associated with the node (201) will be scheduled for transmission.

6. . The node (201) as claimed in any of claims 2 to 4, wherein the set of actions define which resources are to be used at each device of the multiple devices (204, 205, 206) associated with the node (201).

7. The node (201) as claimed in any preceding claim, wherein the local reward or the local cost is a function of queue lengths of the multiple devices (204, 205, 206) associated with the node (201) and/or wherein the global reward or global cost comprises the sum of the local rewards or local costs respectively.

8. The node (201) as claimed in any preceding claim, wherein the node is further configured to send a message to each of the one or more other nodes (202, 203) in the network (200) indicating the local reward or the local cost of the multiple devices (204, 205, 206) in the network (200) associated with the node (201).

9. The node (201) as claimed in any preceding claim, wherein the respective message does not comprise state information, actions or policy information for devices associated with the respective node of the one or more other nodes (202, 203).

10. The node (201) as claimed in any preceding claim, wherein the multiple devices (204, 205, 206) which are associated with the node (201) are devices in the communications network for which the node (201) is spatially closer than the one or more other nodes (202, 203).

11. The node (201) as claimed in any preceding claim, wherein the node is configured to update the first policy using a policy gradient method that employs sample averages over multiple trajectories for estimating an advantage function and/or wherein the first policy is parameterized by a vector comprising weights of a neural network.

12. The node (201) as claimed in any preceding claim, wherein the node (201) is a base station and the communications network (200) is a cellular network.

13. A method (400) for a wireless communications network (200) comprising a node (201), the node being configured to communicate with one or more other nodes (202, 203) in the communications network (200) and to implement one or more policies for multiple devices (204, 205, 206) in the network which are associated with the node (201), the method comprising:

implementing (401) a first policy for the multiple devices (204, 205, 206) which are associated with the node (201); and

determining (402) a local reward or local cost for the multiple devices (204, 205, 206) which are associated with the node (201), and **characterised in that** the method further comprises:

receiving (403) a respective message from each of the one or more other nodes (202, 203) in the network (200) indicating corresponding local rewards or local costs of devices (207, 208, 209, 210) in the network (200) associated with a respective one of the other nodes (202, 203);

in dependence on the or each respective message, determining (404) a global reward or global cost for the communications network (200); and

updating (405) the first policy in dependence on the global reward or global cost, wherein the first policy is for performing uplink scheduling for the multiple devices (204, 205, 206) associated with the node (201) and/or wherein the first policy is for allocating radio resources to the multiple devices (204, 205, 206) associated with the node (201).

14. A computer readable storage medium (216) having stored thereon computer readable instructions that, when executed at a computer system, cause the computer system to perform the method of claim 13.

**Patentansprüche**

1. Knoten (201) für ein drahtloses Kommunikationsnetz (200), wobei der Knoten dazu konfiguriert ist, mit einem oder mehreren anderen Knoten (202, 203) in dem Kommunikationsnetz zu kommunizieren und eine oder mehrere Richtlinien für mehrere Einrichtungen (204, 205, 206), die mit dem Knoten (201) verknüpft sind, in dem Netz (200) zu implementieren, wobei der Knoten (201) zu Folgendem konfiguriert ist:

Implementieren (401) einer ersten Richtlinie für die mehreren Einrichtungen (204, 205, 206), die mit dem Knoten (201) verknüpft sind; und Bestimmen (402) einer lokalen Belohnung oder lokaler Kosten für die mehreren Einrichtungen (204, 205, 206), die mit dem Knoten (201) verknüpft sind, und **dadurch gekennzeichnet, dass** der Knoten (201) ferner zu Folgendem konfiguriert ist:

Empfangen (403) einer jeweiligen Nachricht von jedem des einen oder der mehreren anderen Knoten (202, 203) in dem Netz (200), die entsprechende lokale Belohnungen oder lokale Kosten von Einrichtungen (207, 208, 209, 210) in dem Netz (200), die mit einem jeweiligen der anderen Knoten (202, 203) verknüpft sind, angibt;

in Abhängigkeit von der oder jeder jeweiligen Nachricht, Bestimmen (404) einer globalen Belohnung oder globaler Kosten für das Kommunikationsnetz (200); und

Aktualisieren (405) der ersten Richtlinie in Abhängigkeit von der globalen Belohnung oder den globalen Kosten, wobei die erste Richtlinie zum Durchführen einer Uplink-Planung für die mehreren Einrichtungen (204, 205, 206), die mit dem Knoten (201) verknüpft sind, dient und/oder wobei die erste Richtlinie zum Zuweisen von Funkressourcen an die mehreren Einrichtungen (204, 205, 206), die mit dem Knoten (201) verknüpft sind, dient.

2. Knoten (201) nach Anspruch 1, wobei die erste Richtlinie einen Satz von Aktionen für jede der mehreren Einrichtungen (204, 205, 206), die mit dem Knoten (201) verknüpft sind, definiert und wobei der Knoten (201) dazu konfiguriert ist, die lokale Belohnung oder die lokalen Kosten in Abhängigkeit von Ergebnissen des Satzes von Aktionen zu bestimmen.

3. Knoten (201) nach Anspruch 2, wobei der Knoten (201) dazu konfiguriert ist, Zustandsinformationen für jede der mehreren Einrichtungen (204, 205, 206), die mit dem Knoten (201) verknüpft sind, zu beobachten,

und optional wobei die Zustandsinformationen eine oder mehrere von Warteschlangenlängen und Kanalgewinnen der mehreren Einrichtungen (204, 205, 206), die mit dem Knoten (201) verknüpft sind, umfassen.

4. Knoten (201) nach einem der Ansprüche 2 bis 3, wobei der Knoten (201) zu Folgendem konfiguriert ist:

Beobachten von Zustandsinformationen für jede der mehreren Einrichtungen (204, 205, 206), die mit dem Knoten verknüpft sind, zu einem ersten Zeitpunkt;

Eingeben der Zustandsinformationen in die erste Richtlinie; und Ausgeben des Satzes von Aktionen zur Implementierung durch die mehreren Einrichtungen (204, 205, 206), die mit dem Knoten (201) verknüpft sind,

und optional wobei der Knoten (201) dazu konfiguriert ist, aktualisierte Statusinformationen für die mehreren Einrichtungen (204, 205, 206), die mit dem Knoten (201) verknüpft sind, zu einem zweiten Zeitpunkt nach der Implementierung des Satzes von Aktionen durch die mehreren Einrichtungen (204, 205, 206), die mit dem Knoten (201) verknüpft sind, zu beobachten und die lokale Belohnung oder die lokalen Kosten in Abhängigkeit von den aktualisierten Statusinformationen zu bestimmen.

5.  Knoten (201) nach einem der Ansprüche 2 bis 4, wobei der Satz von Aktionen definiert, welche Einrichtungen der mehreren Einrichtungen (204, 205, 206), die mit dem Knoten (201) verknüpft sind, für eine Übertragung geplant werden.

6.  Knoten (201) nach einem der Ansprüche 2 bis 4, wobei der Satz von Aktionen definiert, welche Ressourcen bei jeder Einrichtung der mehreren Einrichtungen (204, 205, 206), die mit dem Knoten (201) verknüpft sind, zu verwenden sind.

7.  Knoten (201) nach einem der vorhergehenden Ansprüche, wobei die lokale Belohnung oder die lokalen Kosten eine Funktion von Warteschlangenlängen der mehreren Einrichtungen (204, 205, 206) sind, die mit dem Knoten (201) verknüpft sind, und/oder wobei die globale Belohnung oder die globalen Kosten die Summe der lokalen Belohnungen bzw. lokalen Kosten umfassen.

8.  Knoten (201) nach einem der vorhergehenden Ansprüche, wobei der Knoten ferner dazu konfiguriert ist, eine Nachricht an jeden des einen oder der mehreren anderen Knoten (202, 203) in dem Netz (200) zu senden, welche die lokale Belohnung oder die lokalen Kosten der mehreren Einrichtungen (204, 205, 206) in dem Netz (200), die mit dem Knoten (201) verknüpft sind, angibt.

9.  Knoten (201) nach einem der vorhergehenden Ansprüche, wobei die jeweilige Nachricht keine Statusinformationen, Aktionen oder Richtlinieninformationen für Einrichtungen umfasst, die mit dem jeweiligen Knoten des einen oder der mehreren anderen Knoten (202, 203) verknüpft sind.

10. Knoten (201) nach einem der vorhergehenden Ansprüche, wobei die mehreren Einrichtungen (204, 205, 206), die mit dem Knoten (201) verknüpft sind, Einrichtungen in dem Kommunikationsnetz sind, für die der Knoten (201) räumlich näher ist als der eine oder die mehreren anderen Knoten (202, 203).

11. Knoten (201) nach einem der vorhergehenden Ansprüche, wobei der Knoten dazu konfiguriert ist, die erste Richtlinie unter Verwendung eines Richtliniengradientenverfahrens, das Stichprobendurchschnitte über mehrere Trajektorien zum Schätzen einer Vorteilsfunktion verwendet, zu aktualisieren, und/oder wobei die erste Richtlinie durch einen Vektor parametrisiert wird, der Gewichtungen eines neuronalen Netzes umfasst.

12. Knoten (201) nach einem der vorhergehenden Ansprüche, wobei der Knoten (201) eine Basisstation ist und das Kommunikationsnetz (200) ein Mobilfunknetz ist.

13. Verfahren (400) für ein drahtloses Kommunikationsnetz (200), umfassend einen Knoten (201), wobei der Knoten dazu konfiguriert ist, mit einem oder mehreren anderen Knoten (202, 203) in dem Kommunikationsnetz (200) zu kommunizieren und eine oder mehrere Richtlinien für mehrere Einrichtungen (204, 205, 206) in dem Netz, die mit dem Knoten (201) verknüpft sind, zu implementieren, wobei das Verfahren Folgendes umfasst:

    Implementieren (401) einer ersten Richtlinie für die mehreren Einrichtungen (204, 205, 206), die mit dem Knoten (201) verknüpft sind; und Bestimmen (402) einer lokalen Belohnung oder lokaler Kosten für die mehreren Einrichtungen (204, 205, 206), die mit dem Knoten (201) verknüpft sind, und **dadurch gekennzeichnet, dass** das Verfahren ferner Folgendes umfasst:

    Empfangen (403) einer jeweiligen Nachricht von jedem des einen oder der mehreren anderen Knoten (202, 203) in dem Netz (200), die entsprechende lokale Belohnungen oder lokale Kosten von Einrichtungen (207, 208, 209, 210) in dem Netz (200), die mit einem jeweiligen der anderen Knoten (202, 203) verknüpft sind, angibt; in Abhängigkeit von der oder jeder jeweiligen Nachricht, Bestimmen (404) einer globalen Belohnung oder globaler Kosten für das Kommunikationsnetz (200); und Aktualisieren (405) der ersten Richtlinie in Abhängigkeit von der globalen Belohnung oder den globalen Kosten, wobei die erste Richtlinie zum Durchführen einer Uplink-Planung für die mehreren Einrichtungen (204, 205, 206), die mit dem Knoten (201) verknüpft sind, dient und/oder wobei die erste Richtlinie zum Zuweisen von Funkressourcen an die mehreren Einrichtungen (204, 205, 206), die mit dem Knoten (201) verknüpft sind, dient.

14. Computerlesbares Speichermedium (216), auf dem computerlesbare Anweisungen gespeichert sind, die, wenn sie auf einem Computersystem ausgeführt werden, das Computersystem dazu veranlassen, das Verfahren nach Anspruch 13 durchzuführen.

## Revendications

1. Nœud (201) pour un réseau de communication sans fil (200), le nœud étant configuré pour communiquer avec un ou plusieurs autres nœuds (202, 203) dans le réseau de communication et pour mettre en œuvre une ou plusieurs politiques pour de multiples dispositifs (204, 205, 206) dans le réseau (200) qui sont associés au nœud (201), le nœud (201) étant configuré pour :

   mettre en œuvre (401) une première politique pour les multiples dispositifs (204, 205, 206) qui sont associés au nœud (201) ; et
   déterminer (402) une récompense locale ou un coût local pour les multiples dispositifs (204, 205, 206) qui sont associés au nœud (201), et **caractérisé en ce que** le nœud (201) est également configuré pour :

      recevoir (403) un message respectif de chacun des un ou plusieurs autres nœuds (202, 203) dans le réseau (200) indiquant les récompenses locales correspondantes ou les coûts locaux des dispositifs (207, 208, 209, 210) dans le réseau (200) associés à un nœud respectif des autres nœuds (202, 203) ;
      en fonction du ou de chaque message respectif, déterminer (404) une récompense globale ou un coût global pour le réseau de communication (200) ; et
      mettre à jour (405) la première politique en fonction de la récompense globale ou du coût global, dans lequel la première politique est destinée à la réalisation d'une planification de liaison montante pour les multiples dispositifs (204, 205, 206) associés au nœud (201) et/ou dans lequel la première politique est destinée à l'allocation de ressources radio aux multiples dispositifs (204, 205, 206) associés au nœud (201).

2. Nœud (201) selon la revendication 1, dans lequel la première politique définit un ensemble d'actions pour chacun des multiples dispositifs (204, 205, 206) associés au nœud (201) et dans lequel le nœud (201) est configuré pour déterminer la récompense locale ou le coût local en fonction des résultats de l'ensemble d'actions.

3. Nœud (201) selon la revendication 2, dans lequel le nœud (201) est configuré pour observer les informations d'état de chacun des multiples dispositifs (204, 205, 206) associés au nœud (201), et éventuellement dans lequel les informations d'état comprennent une ou plusieurs longueurs de file d'attente et des gains de canal des multiples dispositifs (204, 205, 206) associés au nœud (201).

4. Nœud (201) selon l'une quelconque des revendications 2 et 3, dans lequel le nœud (201) est configuré pour :

      observer les informations d'état de chacun des multiples dispositifs (204, 205, 206) associés au nœud à un premier instant ;
      saisir les informations d'état dans la première politique ; et
      produire l'ensemble des actions à mettre en œuvre par les multiples dispositifs (204, 205, 206) associés au nœud (201),
      et éventuellement dans lequel le nœud (201) est configuré pour observer des informations d'état mises à jour pour des multiples dispositifs (204, 205, 206) associés au nœud (201) à un second instant après la mise en œuvre de l'ensemble d'actions par les multiples dispositifs (204, 205, 206) associés au nœud (201) et déterminer la récompense locale ou le coût local en fonction des informations d'état mises à jour.

5. Nœud (201) selon l'une quelconque des revendications 2 à 4, dans lequel l'ensemble d'actions définit quels dispositifs parmi les multiples dispositifs (204, 205, 206) associés au nœud (201) seront planifiés pour la transmission.

6. Nœud (201) selon l'une quelconque des revendications 2 à 4, dans lequel l'ensemble d'actions définit quelles ressources doivent être utilisées sur chaque dispositif parmi les multiples dispositifs (204, 205, 206) associés au nœud (201).

7. Nœud (201) selon une quelconque revendication précédente, dans lequel la récompense locale ou le coût local est une fonction des longueurs de file d'attente des multiples dispositifs (204, 205, 206) associés au nœud (201) et/ou dans lequel la récompense globale ou le coût global comprend la somme des récompenses locales ou des coûts locaux respectivement.

8. Nœud (201) selon une quelconque revendication précédente, dans lequel le nœud est également configuré pour envoyer un message à chacun des un ou plusieurs autres nœuds (202, 203) dans le réseau (200) indiquant la récompense locale ou le coût local des multiples dispositifs (204, 205, 206) dans le réseau (200) associés au nœud (201).

9. Nœud (201) selon une quelconque revendication précédente, dans lequel le message respectif ne comprend pas d'informations d'état, d'actions ou d'informations de politique pour les dispositifs associés au nœud respectif parmi les un ou plusieurs autres nœuds (202, 203).

10. Nœud (201) selon une quelconque revendication précédente, dans lequel les multiples dispositifs (204, 205, 206) qui sont associés au nœud (201) sont des dispositifs dans le réseau de communication pour lequel le nœud (201) est spatialement plus proche que les un ou plusieurs autres nœuds (202, 203).

11. Nœud (201) selon une quelconque revendication précédente, dans lequel le nœud est configuré pour mettre à jour la première politique à l'aide d'un procédé de gradient de politique qui utilise des moyennes d'échantillons sur de multiples trajectoires pour l'estimation d'une fonction d'avantage et/ou dans lequel la première politique est paramétrée par un vecteur comprenant des pondérations d'un réseau neuronal.

12. Nœud (201) selon une quelconque revendication précédente, dans lequel le nœud (201) est une station de base et le réseau de communication (200) est un réseau cellulaire.

13. Procédé (400) pour un réseau de communication sans fil (200), comprenant un nœud (201), le nœud étant configuré pour communiquer avec un ou plusieurs autres nœuds (202, 203) dans le réseau de communication (200) et pour mettre en œuvre une ou plusieurs politiques pour de multiples dispositifs (204, 205, 206) dans le réseau qui sont associés au nœud (201), le procédé comprenant :

la mise en œuvre (401) d'une première politique pour les multiples dispositifs (204, 205, 206) qui sont associés au nœud (201) ; et
la détermination (402) d'une récompense locale ou d'un coût local pour les multiples dispositifs (204, 205, 206) qui sont associés au nœud (201), et **caractérisé en ce que** le procédé comprend également :

la réception (403) d'un message respectif de chacun des un ou plusieurs autres nœuds (202, 203) dans le réseau (200) indiquant les récompenses locales correspondantes ou les coûts locaux des dispositifs (207, 208, 209, 210) dans le réseau (200) associés à un nœud respectif des autres nœuds (202, 203) ;
en fonction du ou de chaque message respectif, la détermination (404) d'une récompense globale ou d'un coût global pour le réseau de communication (200) ; et
la mise à jour (405) de la première politique en fonction de la récompense globale ou du coût global, dans lequel la première politique est destinée à la réalisation d'une planification de liaison montante pour les multiples dispositifs (204, 205, 206) associés au nœud (201) et/ou dans lequel la première politique est destinée à l'allocation de ressources radio aux multiples dispositifs (204, 205, 206) associés au nœud (201).

14. Support de stockage lisible par ordinateur (216) ayant des instructions lisibles par ordinateur stockées sur celui-ci qui, lorsqu'elles sont exécutées au niveau d'un système informatique, amènent le système informatique à réaliser le procédé selon la revendication 13.

Figure 1

Figure 2

Figure 3

EP 4 385 268 B1

Figure 4

400

401 — Implement a first policy for the multiple devices which are associated with the node

402 — Determine a local reward or local cost for the multiple devices which are associated with the node

403 — Receive a respective message from each of the one or more other nodes in the network indicating corresponding local rewards or local costs of devices in the network associated with each of the other nodes

404 — In dependence on the or each respective message, determine a global reward or global cost for the communications network

405 — Update the first policy in dependence on the global reward or global cost

Figure 5

Figure 6

Figure 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012072445 A1